(19) Europäisches Patentamt
European Patent Office
Office européen des brevets

(11) **EP 4 293 954 A1**

(12) **DEMANDE DE BREVET EUROPEEN**

(43) Date de publication:
**20.12.2023 Bulletin 2023/51**

(21) Numéro de dépôt: **23172866.8**

(22) Date de dépôt: **11.05.2023**

(51) Classification Internationale des Brevets (IPC):
**H04L 9/32** *(2006.01)*

(52) Classification Coopérative des Brevets (CPC):
**H04L 9/3231;** H04L 2209/46

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**KH MA MD TN**

(30) Priorité: **14.06.2022 FR 2205765**

(71) Demandeur: **IDEMIA Identity & Security France 92400 Courbevoie (FR)**

(72) Inventeurs:
- **CHABANNE, Hervé 92400 COURBEVOIE (FR)**
- **DESPIEGEL, Vincent 92400 Courbevoie (FR)**

(74) Mandataire: **Idemia 2, place Samuel de Champlain 92400 Courbevoie (FR)**

(54) **PROCEDE DE CALCUL DISTRIBUE D'UNE METRIQUE REPRESENTATIVE D'UN ECART ENTRE DEUX DONNEES**

(57) Procédé de calcul distribué d'une métrique $f(X,Y)$ représentative d'un écart entre une donnée $X$ comprenant n bits $(x_1, \ldots, x_n)$ et une donnée $Y$, la métrique $f(X,Y)$ étant de la forme

$$f(X,Y) = f_X(X) + \sum_{i=1}^{n} f_i(x_i,Y) + f_Y(Y)$$

, le procédé étant mis en oeuvre par un système comprenant m + 1 dispositifs, le procédé comprenant :
- pour tout j allant de 1 à m, calcul d'au moins une donnée intermédiaire par le dispositif d'indice *j* dépendant de la donnée $X$ et de la donnée $Y$, et transmission au dispositif d'indice m + 1 d'au moins un résultat comprenant ou dépendant de chaque donnée intermédiaire,
- détermination, par le dispositif d'indice m + 1, de la métrique $f(X, Y)$, la détermination comprenant une sommation de chaque résultat pour obtenir une valeur égale à $\sum_{i=1}^{n} f_i(x_i,Y)$ ou une valeur égale à $\sum_{i=1}^{n} f_i(x_i,Y) + f_Y(Y)$.

Figure 1

EP 4 293 954 A1

**Description**

**DOMAINE TECHNIQUE**

La présente divulgation concerne un procédé de calcul d'une métrique représentative d'un écart entre deux données, trouvant avantageusement application dans le domaine de la biométrie.

**ARRIERE-PLAN TECHNOLOGIQUE**

On connaît différentes métriques pour déterminer si deux données sont plus ou moins proches. La distance de Hamming est l'une d'entre elles.

Ces métriques sont notamment utilisées pour comparer une donnée biométrique d'entrée et une donnée biométrique de référence préalablement enrôlée et mémorisée dans une base de données.

De telles bases de données doivent être sécurisées en confidentialité, de même que les traitements se fondant sur leur contenu, notamment le calcul d'une métrique du type mentionné précédemment. D'ailleurs, la constitution de telles bases de données peut, dans certains pays, n'être autorisée que si cette confidentialité est garantie.

**RESUME**

Un but de la présente divulgation est de sécuriser le calcul d'une métrique représentative d'un écart entre deux données.

Il est à cet effet proposé, selon un premier aspect, un procédé de calcul distribué d'une métrique $f(X, Y)$ représentative d'un écart entre une donnée $X$ comprenant n bits $(x_1, \dots, x_n)$ et une donnée $Y$, la métrique $f(X, Y)$ étant de la forme :

$$f(X, Y) = f_X(X) + \sum_{i=1}^{n} f_i(x_i, Y) + f_Y(Y)$$

où $f_X$ est une fonction dépendant uniquement de la donnée $X$, $f_Y$ est une fonction dépendant uniquement de la donnée $Y$, et pour tout $i$ allant de 1 à $n$, $f_i$ est une fonction prédéfinie, le procédé étant mis en oeuvre par un système comprenant $m + 1$ dispositifs $(D_1, \dots, D_{m+1})$ distincts ayant des indices respectifs allant de 1 à $m + 1$, avec $m \geq 2$, le procédé comprenant :

- pour tout $j$ allant de 1 à $m$, calcul d'au moins une donnée intermédiaire par le dispositif d'indice $j$ ($D_j$), chaque donnée intermédiaire dépendant de la donnée $X$ et de la donnée $Y$, et transmission au dispositif d'indice $m + 1$ ($D_{m+1}$) d'au moins un résultat comprenant ou dépendant de chaque donnée intermédiaire,
- détermination, par le dispositif d'indice $m + 1$ ($D_{m+1}$), de la métrique $f(X, Y)$, la détermination comprenant une sommation de chaque résultat pour obtenir une valeur égale à $\sum_{i=1}^{n} f_i(x_i, Y)$ ou une valeur égale à $\sum_{i=1}^{n} f_i(x_i, Y) + f_Y(Y)$.

Le procédé selon le premier aspect peut également comprendre les caractéristiques optionnelles suivantes, prises seules ou en combinaison à chaque fois que cela est techniquement possible.

Dans un premier mode de réalisation :

- la donnée $X$ forme un vecteur de $K$ données $(X_1, \dots, X_K)$, où pour tout $i$ allant de 1 à $K$, la donnée $X_i$ forme un vecteur de $l$ bits $(x_{K(i-1)+1}, \dots, x_{K(i-1)+l})$,
- la donnée $Y$ forme un vecteur $(Y_1, \dots, Y_K)$, où pour tout $i$ allant de 1 à $K$, $Y_i$ est un entier,
- on a $n = K.l$, où $K > 1$ et $l > 1$,
- pour tout $Í$ allant de 1 à $K$ et pour tout $p$ allant de 1 à $l$, on a :

$$f_{K(i-1)+p}\big(x_{K(i-1)+p}, Y\big) = c_{p,i}(Y). x_{K(i-1)+p}$$

où $c_{p,i}(Y)$ est un scalaire dont la valeur peut dépendre de $i$, de $p$ et de la donnée $Y$,

- pour tout $j$ allant de 1 à $m$, le dispositif d'indice $j$ ($D_j$) calcule $l$ données intermédiaires $R_{j,1}(X),\ldots, R_{j,l}(X)$, chaque donnée intermédiaire étant calculée comme suit : pour tout $p$ allant de 1 à $l$,

$$R_{j,p}(X) = \sum_{i=1}^{K} DPF_{j,p}(a, c_{p,i}(Y); x_{K(i-1)+p})$$

où $a$ est une constante prédéfinie,

- pour tout $i$ allant de 1 à $K$ et pour tout $p$ allant de 1 à l, $DPF_{1,p}(a,c_{p,i}(Y);\cdot) ,\ldots, DPF_{m,p}(a,c_{p,i}(Y);\cdot)$ sont m fonctions vérifiant les conditions suivantes :

$$\sum_{j=1}^{m} DPF_{j,p}\big(a, c_{p,i}(Y);\ x\big) = \begin{cases} c_{p,i}(Y) & \text{si } x = a \\ 0 & \text{si } x \neq a \end{cases}$$

Dans ce premier mode de réalisation, le procédé peut comprendre les étapes suivantes :

- pour tout $j$ allant de 1 à $m$, calcul par le dispositif d'indice $j$ ($D_j$) d'un résultat $R_j(X)$ à partir de la somme des $l$ données intermédiaires $R_{j,1}(X),\ldots, R_{j,l}(X)$,
- pour tout $j$ allant de 1 à $m$, transmission du résultat $R_j(X)$ au dispositif d'indice $m + 1$ ($D_{m+1}$),
- sommation, par le dispositif d'indice $m + 1$ ($D_{m+1}$), des m résultats $R_1(X),\ldots, R_m(X)$ de sorte à obtenir la valeur du terme $\sum_{i=1}^{n} f_i(x_i, Y)$.

De préférence, dans lequel pour tout $j$ allant de 1 à $m$, le résultat $R_j(X)$ est obtenu par sommation des $l$ données intermédiaires $R_{j,1}(X),\ldots, R_{j,l}(X)$ et d'un terme $f_j Y$ mémorisé par le dispositif d'indice $j$ ($D_j$), et dans lequel :

$$\sum_{j=1}^{m} f_j Y = f_Y(Y)$$

Dans une variante du premier mode de réalisation, permettant d'obtenir une métrique constituant un produit scalaire, on a :

$$a = 1$$

$$f_X(X) = f_Y(Y) = 0$$

et pour tout $p$ allant de 1 à l et pour tout Í allant de 1 à K :

$$c_{p,i}(Y) = 2^{p-1}.Y_i$$

Dans une autre variante du premier mode de réalisation, permettant d'obtenir une métrique constituant le carré d'une distance euclidienne, on a :

$$a = 1$$

$$f_X(X) = \sum_{i=1}^{K} X_i^2$$

$$f_Y(Y) = \sum_{i=1}^{K} Y_i^2$$

et dans lequel, pour tout $p$ allant de 1 à $l$ et pour tout $i$ allant de 1 à $K$ :

$$c_{p,i}(Y) = -2^p . Y_i$$

Dans une autre variante du premier mode de réalisation permettant d'obtenir une distance de Mahalanobis, on a :

$$a = 1$$

$$f_X(X) = X^T M X$$

$$f_Y(Y) = Y^T M Y$$

où $M$ est une matrice carrée prédéfinie de la forme $(M_{u,v})_{u,v=1,\ldots,K}$, et dans lequel, pour tout $p$ allant de 1 à $l$ et pour tout $i$ allant de 1 à $K$ :

$$c_{p,i}(Y) = -2^p . \sum_{v=1}^{K} M_{i,v} Y_v$$

Dans un deuxième mode de réalisation, permettant d'obtenir une métrique constituant une distance de Hamming, on a :

- la donnée $Y$ forme un vecteur de bits $(y_1, \ldots, y_n)$,
- on a :

$$f_X(X) = f_Y(Y) = 0$$

- pour tout $Í$ allant de 1 à n, on a :

$$f_i(x_i, Y) = x_i \oplus y_i$$

où $\oplus$ est une disjonction exclusive,
- pour tout $j$ allant de 1 à $m$, le dispositif d'indice $j$ ($D_j$) calcule une donnée intermédiaire $R_j(X)$, comme suit :

$$R_j(X) = \sum_{i=1}^{n} DPF_j(1 - y_i, 1; x_i)$$

dans lequel $DPF_1(0,1; \cdot)$ ,..., $DPF_m(0,1; \cdot)$ sont m fonctions vérifiant les conditions suivantes :

$$\sum_{j=1}^{m} DPF_j(0,1; x) = \begin{cases} 1 & \text{si } x = 0 \\ 0 & \text{si } x \neq 0 \end{cases}$$

dans lequel $DPF_1(1,1 ; \cdot)$, ..., $DPF_m(1,1 ; \cdot)$ sont m fonctions vérifiant les conditions suivantes :

$$\sum_{j=1}^{m} DPF_j(1,1; x) = \begin{cases} 1 & \text{si } x = 1 \\ 0 & \text{si } x \neq 1 \end{cases}$$

Et dans lequel le dispositif d'indice $m + 1$ ($D_{m+1}$) obtient une valeur égale à $\sum_{i=1}^{n} f_i(x_i, Y)$ par sommation des m résultats $R_1(X),..., R_m(X)$.

De préférence, la donnée $X$ et la donnée $Y$ sont des données biométriques.

Il est également proposé, selon un deuxième aspect, un procédé d'authentification ou d'identification biométrique comprenant des étapes de :

- acquisition par un capteur d'une donnée biométrique X se rapportant à un individu,
- calcul d'une métrique $f(X, Y)$ représentative d'un écart entre la donnée biométrique $X$ et une donnée biométrique $Y$ de référence au moyen du procédé selon le premier aspect,
- comparaison entre la métrique $f(X,Y)$ et un seuil prédéfini.

De préférence, la comparaison comprend des calculs distribués sur les $m + 1$ dispositifs ($D_1,..., D_{m+1}$).

Il est également proposé, selon un troisième aspect, une mémoire lisible par ordinateur stockant des instructions exécutables par l'ordinateur pour l'exécution des étapes du procédé selon le premier aspect ou selon le deuxième aspect.

Il est également proposé, selon un quatrième aspect, un système de calcul (4) distribué d'une métrique $f(X,Y)$ représentative d'un écart entre une donnée $X$ comprenant $n$ bits ($x_1, ... , x_n$) et une donnée $Y$, dans lequel la métrique $f(X,Y)$ est de la forme :

$$f(X,Y) = f_X(X) + \sum_{i=1}^{n} f_i(x_i, Y) + f_Y(Y)$$

où $f_X$ est une fonction dépendant de la donnée $X$, $f_Y$ est une fonction dépendant de la donnée $Y$, et, pour tout $i$ allant de 1 à $n$, $f_i$ est une fonction prédéfinie,

le système comprenant $m + 1$ dispositifs ($D_1, ... ,D_{m+1}$) distincts ayant des indices respectifs allant de 1 à $m + 1$, avec $m \geq 2$, dans lequel :

- pour tout $j$ allant de 1 à $m$, le dispositif d'indice $j$ ($D_j$) est configuré pour calculer au moins une donnée intermédiaire, chaque donnée intermédiaire dépendant de la donnée $X$ et de la donnée $Y$, et pour transmettre au dispositif d'indice $m + 1$ ($D_{m+1}$) au moins un résultat comprenant ou dépendant de chaque donnée intermédiaire,
- le dispositif d'indice $m + 1$ ($D_{m+1}$) est configuré pour déterminer la métrique $f(X,Y)$, la détermination comprenant une sommation de chaque résultat pour obtenir la valeur du terme $\sum_{i=1}^{n} f_i(x_i, Y)$.

Il est également proposé, selon un cinquième aspect, un système d'authentification ou d'identification biométrique comprenant :

- un capteur biométrique configuré pour acquérir une donnée biométrique X se rapportant à un individu,
- un système de calcul (4) selon le quatrième aspect pour calculer une métrique $f(X,Y)$ représentative d'un écart entre la donnée biométrique X et une donnée biométrique Y de référence,
- comparaison entre la métrique $f(X,Y)$ et un seuil prédéfini.

**DESCRIPTION DES FIGURES**

D'autres caractéristiques, buts et avantages ressortiront de la description qui suit, qui est purement illustrative et non limitative, et qui doit être lue en regard des dessins annexés sur lesquels :

La figure 1 illustre de façon schématique un système d'authentification ou d'identification biométrique selon un mode de réalisation.
La figure 2 est un organigramme d'étapes d'un procédé d'authentification ou d'identification biométrique selon un mode de réalisation.

Sur l'ensemble des figures, les éléments similaires portent des références identiques.

**DESCRIPTION DETAILLEE DE L'INVENTION**

**1) Système d'authentification ou d'identification biométrique**

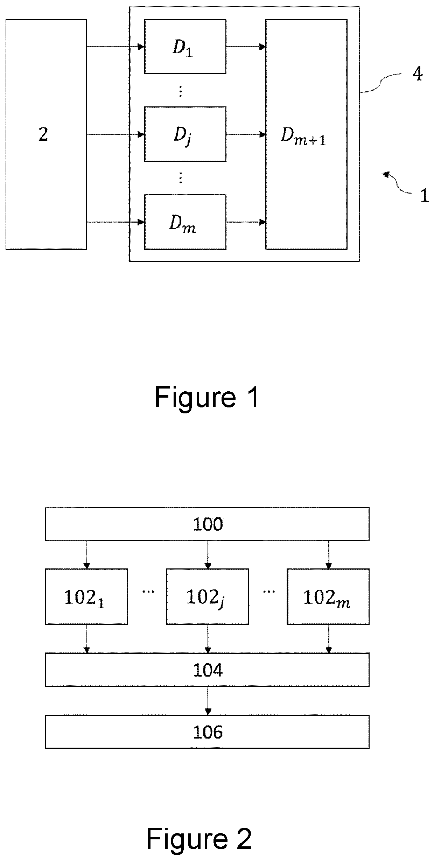

En référence à la **figure 1,** un système 1 d'authentification ou d'identification biométrique comprend un capteur biométrique 2 et un système de calcul 4.

Le capteur biométrique 2 est configuré pour acquérir une donnée biométrique X se rapportant à un individu. La donnée biométrique X peut être issue d'une empreinte digitale ou d'une empreinte d'iris ou d'un visage par exemple. La donnée biométrique X comprend $n$ bits $(x_1, \ldots, x_n)$.

Le système de calcul 4 a pour fonction de réaliser des traitements, notamment le calcul d'une métrique $f(X, Y)$ représentative d'un écart entre la donnée biométrique X acquise par le capteur biométrique et une donnée biométrique Y. La donnée biométrique Y constitue une donnée de référence préalablement enrôlée (par exemple au moyen du capteur biométrique 2 ou bien d'un autre capteur biométrique).

Le système de calcul 4 comprend $m + 1$ dispositifs $D_1, \ldots, D_{m+1}$ distincts ayant des indices respectifs allant de 1 à $m + 1$, avec $m \geq 2$. Il est en particulier possible de choisir $m = 2$. Les dispositifs $D_1, \ldots, D_{m+1}$ sont distants les uns des autres, et interconnectés par un réseau de type quelconque, filaire ou non.

Les m dispositifs $D_1, \ldots, D_m$ sont destinés à réaliser des calculs en parallèle, ces calculs constituent différentes contributions au calcul de la métrique $f(X,Y)$.

Pour tout $j$ allant de 1 à $m$, le dispositif $D_j$ comprend une interface d'entrée pour recevoir la donnée biométrique X, et pour recevoir par ailleurs la donnée biométrique Y ou bien des données précalculées qui dépendent de la donnée biométrique Y.

Dans une variante, la donnée biométrique Y est stockée dans une base de données locale ou distante à laquelle le dispositif $D_j$ a accès.

Dans une autre variante avantageuse, des données précalculées qui dépendent de la donnée biométrique Y sont stockées par le dispositif $D_j$ et la donnée biométrique Y n'est pas stockée en tant que telle dans le système de calcul 4 ni dans une base de données locale ou distante. En outre, chaque dispositif Dj ne stocke qu'une partie des données précalculées dépendant de la donnée biométrique Y. Cette variante est avantageuse car elle améliore la confidentialité de la donnée biométrique Y. Dans certains modes de réalisations qui seront détaillés plus loin, les données précalculées comprennent des fonctions de la forme $DPF_{1,p}(a, c_{p,i}(Y) ; \cdot)$.

Pour tout $j$ allant de 1 à $m$, le dispositif $D_j$ comprend au moins un processeur configuré pour appliquer un traitement qui constitue une contribution au calcul de la métrique $f(X, Y)$. Le ou chaque processeur est de type quelconque, par exemple un circuit programmable (ASIC, FPGA) ou un non. Le dispositif $D_j$ comprend en outre une mémoire qui stocke un programme comprenant des instructions de code pour appliquer ce traitement, lorsque le programme est exécuté par le ou chaque processeur du dispositif $D_j$.

Pour tout $j$ allant de 1 à $m$, le dispositif $D_j$ comprend une interface de sortie pour transmettre des données au dispositif $D_{m+1}$.

Le dispositif $D_{m+1}$ comprend une interface d'entrée pour recevoir des données émanant des m dispositifs $D_1, \ldots, D_{m+1}$.

Le dispositif $D_{m+1}$ comprend par ailleurs au moins un processeur configuré pour appliquer un traitement comprenant notamment une contribution finale au calcul de la métrique $f(X,Y)$. Le ou chaque processeur est de type quelconque, par exemple un circuit programmable (ASIC, FPGA) ou un non. Le dispositif $D_{m+1}$ comprend en outre une mémoire qui stocke un programme comprenant des instructions de code pour appliquer ce traitement, lorsque le programme est exécuté par le ou chaque processeur du dispositif $D_{m+1}$.

## 2) Considérations générales sur la métrique $f(X,Y)$

Le système de calcul 4 est en particulier configuré pour calculer une métrique $f(X, Y)$ de la forme suivante :

$$f(X,Y) = f_X(X) + \sum_{i=1}^{n} f_i(x_i, Y) + f_Y(Y)$$

où $f_X$ est une fonction dépendant de la donnée $X$, $f_Y$ est une fonction dépendant de la donnée $Y$, et, pour tout $\text{Í}$ allant de 1 à $n$, $f_i$ est une fonction prédéfinie.

La métrique $f(X, Y)$ peut en particulier être l'une des métriques suivantes :

- Le produit scalaire des données biométriques $X$ et $Y$,
- Le carré de la distance euclidienne entre les données biométriques $X$ et $Y$,
- Le carré de la distance de de Mahalanobis entre les données biométriques $X$ et $Y$,
- La distance de Hamming entre les données biométriques $X$ et $Y$.

Ces différents modes de réalisation sont détaillés dans ce qui suit.

## 3) Procédé d'authentification ou d'identification biométrique

En référence à la **figure 2,** un procédé d'authentification ou d'identification biométrique mis en oeuvre par le système 1 comprend les étapes suivantes.

Dans une étape d'acquisition 100, le capteur biométrique 2 acquiert la donnée biométrique $X$. La donnée biométrique $X$ est transmise par le capteur biométrique 2 aux dispositifs $D_1, ... , D_m$.

Pour tout $j$ allant de 1 à $m$, le dispositif $D_j$ met en oeuvre un traitement désigné par la référence $102_j$. Le traitement $102_j$ comprend le calcul d'au moins une donnée intermédiaire, chaque donnée intermédiaire dépendant de la donnée $X$ et de la donnée $Y$, et la transmission au dispositif $D_{m+1}$ d'au moins un résultat comprenant ou dépendant de chaque donnée intermédiaire.

Dans une étape 104, Le dispositif $D_{m+1}$ détermine la métrique $f(X, Y)$ et s'aide pour cela de chaque résultat produit au cours des étapes qui précèdent. Cette détermination comprend en particulier une sommation de chaque résultat fourni par les dispositifs $D_1, ... , D_m$ pour obtenir une valeur égale à $\sum_{i=1}^{n} f_i(x_i, Y)$ ou une valeur égale à $\sum_{i=1}^{n} f_i(x_i, Y) + f_Y(Y)$. La sommation réalisée et la valeur obtenue par le dispositif $D_{m+1}$ dépendent du type de la métrique calculée, comme on le verra dans la suite.

Dans une étape 106, le dispositif $D_{m+1}$ compare la métrique $f(X, Y)$ calculée avec un seuil. Sur la base de cette comparaison, le dispositif $D_{m+1}$ génère un résultat d'authentification ou d'identification.

Si la métrique $f(X,Y)$ est inférieure au seuil, alors il est considéré que l'écart entre les données biométriques $X$ et $Y$ est faible. Autrement dit, il est considéré que la donnée biométrique $X$ correspond à la donnée biométrique $Y$ préalablement enrôlée. Dans ce cas, le résultat d'authentification ou d'identification généré par le système 1 est positif. L'individu auquel se rapporte la donnée biométrique $X$ est alors authentifié ou identifié.

Si au contraire la métrique $f(X,Y)$ n'est pas inférieure au seuil, alors il est considéré que l'écart entre les données biométriques $X$ et $Y$ est élevé. Autrement dit, il est considéré que la donnée biométrique $X$ ne correspond pas à la donnée biométrique $Y$ préalablement enrôlée. Dans ce cas, le résultat d'authentification ou d'identification est négatif. L'individu auquel se rapporte la donnée biométrique $X$ n'est alors pas authentifié ou identifié.

Le procédé d'authentification ou d'identification biométrique peut être utilisée dans différentes applications. L'une d'entre elles est de conditionner l'accès à une zone sécurisée, par exemple une zone d'embarquement dans un moyen de transport tel qu'un avion.

## 3.1) Produit scalaire

Dans un premier mode de réalisation, la métrique $f(X, Y)$ est le produit scalaire des données biométriques $X$ et $Y$.

Les données d'entrées du calcul de la métrique $f(X, Y)$ sont alors de la forme suivante :

- on a n = $K.l$, où $K > 1$ et $l > 1$.
- La donnée $X$ forme un vecteur de $K$ données $(X_1, ... , X_K)$, où pour tout i allant de 1 à $K$, la donnée $X_i$ forme un vecteur de $l$ bits $(x_{K(i-1)+1}, ... , x_{K(i-1)+l})$.
- La donnée $Y$ forme un vecteur $(Y_1, ... , Y_K)$, où pour tout i allant de 1 à $K$, $Y_i$ est un entier.

Par ailleurs, pour tout $\acute{I}$ allant de 1 à $K$ et pour tout $p$ allant de 1 à $l$, on a :

$$f_{K(i-1)+p}\big(x_{K(i-1)+p}, Y\big) = c_{p,i}(Y).\,x_{K(i-1)+p}$$

où $c_{p,i}(Y)$ est un scalaire dont la valeur peut dépendre de $i$, de $p$ et de la donnée $Y$.

Plus précisément, dans le premier mode de réalisation, on a pour tout $p$ allant de 1 à $l$ et pour tout $\acute{I}$ allant de 1 à K :

$$c_{p,i}(Y) = 2^{p-1}.\,Y_i$$

$$f_X(X) = f_Y(Y) = 0$$

Par ailleurs, les traitements mis en oeuvre par le système de calcul 4 sont alors les suivants.

Les termes $c_{p,i}(Y)$ peuvent être calculés dans une étape préliminaire, avant l'étape d'acquisition 100, voire par exemple au cours de l'enrôlement de la donnée biométrique $Y$. Une fois calculés, ces termes $c_{p,i}(Y)$ sont mémorisés par les dispositifs $D_1$ à $D_m$. Ainsi, lorsque la donnée biométrique $X$ est ultérieurement reçue par le système de calcul 4, les termes $c_{p,i}(Y)$ sont disponibles.

Par ailleurs, pour tout $j$ allant de 1 à m, le dispositif $D_j$ calcule $l$ données intermédiaires $R_{j,1}(X), ... , R_{j,l}(X)$ à l'étape 102$_j$, chaque donnée intermédiaire étant calculée comme suit. Pour tout $p$ allant de 1 à $l$,

$$R_{j,p}(X) = \sum_{i=1}^{K} DPF_{j,p}(a, c_{p,i}(Y); x_{K(i-1)+p})$$

où $a$ est une constante prédéfinie égale à 1, et où pour tout $i$ allant de 1 à $K$ et pour tout $p$ allant de 1 à $l$, $DPF_{1,p}(a, c_{p,i}(Y); \cdot)$, ..., $DPF_{m,p}(a, c_{p,i}(Y); \cdot)$ sont m fonctions vérifiant les conditions suivantes :

$$\sum_{j=1}^{m} DPF_{j,p}\big(a, c_{p,i}(Y);\, x\big) = c_{p,i}(Y) \quad \text{si } x = a$$

$$\sum_{j=1}^{m} DPF_{j,p}\big(a, c_{p,i}(Y);\, x\big) = 0 \quad \text{si } x \neq a.$$

Ainsi, les m fonctions $DPF_{1,p}(a, c_{p,i}(Y); \cdot)$, ..., $DPF_{m,p}(a, c_{p,i}(Y); \cdot)$ représentent une distribution d'une fonction de point (« distributed point function » en anglais) respectivement sur les m dispositifs $D_1$ à $D_m$.

Comme indiqué précédemment, ces m fonctions (dépendant des termes $c_{p,i}(Y)$ et de $a$) sont de préférence calculées à l'avance et mémorisées dans les mémoires respectives des m dispositifs $D_1$ à $D_m$, et la donnée biométrique $Y$ n'est quant à elle pas stockée en tant que telle dans le système de calcul 4 ni dans une base de données locale ou distante.

Ensuite, pour tout $j$ allant de 1 à $m$, le dispositif $D_j$ calcule à l'étape 102$_j$ un résultat $R_j(X)$ à partir de la somme des $l$ données intermédiaires $R_{j,1}(X), ... , R_{j,l}(X)$. Plus précisément, dans le premier mode de réalisation, le résultat $R_j(X)$ est la somme de ces $l$ données, c'est-à-dire que :

$$R_j(X) = \sum_{p=1}^{l} R_{j,p}(X)$$

Ensuite, pour tout $j$ allant de 1 à $m$, le dispositif $D_j$ transmet le résultat $R_j(X)$ au dispositif d'indice $D_{m+1}$.

Ainsi, dans le premier mode de réalisation, le dispositif $D_{m+1}$ reçoit m résultats $R_1(X),..., R_m(X)$ respectivement fournis par les dispositifs $D_1, ... ,D_m$.

Pour obtenir la valeur $\sum_{i=1}^{n} f_i(x_i, Y)$ (et par conséquent le produit scalaire $f(X,Y)$ puisque $f_X(X) = f_Y(Y) = 0$), le dispositif $D_{m+1}$ calcule la somme de ces m résultats, comme suit :

$$\sum_{j=1}^{m} R_j(X) = \sum_{i=1}^{n} f_i(x_i, Y) = f(X, Y)$$

### 3.2) Carré de la distance euclidienne

Dans un deuxième mode de réalisation, la métrique $f(X,Y)$ est le carré de la distance euclidienne entre les données biométriques $X$ et $Y$.

Les données d'entrée présentent la même forme que dans le premier mode de réalisation, et on a encore, pour tout $\hat{I}$ allant de 1 à $K$ et pour tout $p$ allant de 1 à $l$:

$$f_{K(i-1)+p}\big(x_{K(i-1)+p}, Y\big) = c_{p,i}(Y). x_{K(i-1)+p}$$

où $c_{p,i}(Y)$ est un scalaire dont la valeur peut dépendre de $i$, de $p$ et de la donnée $Y$.

Toutefois, à la différence du premier mode de réalisation, on a pour tout $p$ allant de 1 à $l$ et pour tout $\hat{I}$ allant de 1 à $K$ :

$$c_{p,i}(Y) = -2^p. Y_i$$

Par ailleurs, on a :

$$f_X(X) = \sum_{i=1}^{K} X_i^2$$

$$f_Y(Y) = \sum_{i=1}^{K} Y_i^2$$

Il faut donc, dans le deuxième mode de réalisation, calculer les termes $f_X(X)$ et $f_Y(Y)$, qui ne sont en principe pas nuls contrairement au premier mode de réalisation.

Le terme $f_X(X)$ peut être calculé par l'un des m + 1 dispositifs du système de calcul 4 à partir de la données biométrique $X$, par exemple par le dispositif $D_{m+1}$ ou bien l'un des autres dispositifs du système.

Dans une variante avantageuse, le terme $f_X(X)$ est calculé par un dispositif associé au capteur biométrique 2 (et ne faisant pas nécessairement partie du système de calcul 4) puis est transmis au dispositif $D_{m+1}$ ou à l'un des autres dispositifs du système qui pourra alors l'inclure dans son résultat qui sera ensuite transmis au dispositif $D_{m+1}$.

Dans une variante simple, le terme $f_Y(Y)$ est mémorisé à l'avance par le dispositif $D_{m+1}$. Le terme $f_Y(Y)$ peut alors être calculé à l'avance, avant l'étape d'acquisition 100, par l'un quelconque des dispositifs du système de calcul 4. Dans cette variante simple, les m résultats $R_j(X)$ sont calculés comme dans le premier mode de réalisation, et il ne reste au dispositif $D_{m+1}$ qu'à sommer les m résultats $R_j(X)$ avec les termes $f_X(X)$ et $f_Y(Y)$ pour obtenir la métrique $f(X,Y)$ constituant le carré de la distance euclidienne entre les données biométriques $X$ et $Y$.

Dans une autre variante, plus sécurisée et donc avantageuse, le calcul du $f_Y(Y)$ est distribué sur les m dispositifs $D_1$ à $D_m$. A partir de la donnée biométrique $Y$, m termes $f_1Y, ..., f_mY$ sont calculés à l'avance, ces termes respectant la condition suivante :

$$\sum_{j=1}^{m} f_j Y = f_Y(Y)$$

Pour tout $j$ allant de 1 à m, le dispositif $D_j$ stocke dans sa mémoire le terme $f_jY$.

Dans cette autre variante, pour tout $j$ allant de 1 à m, le dispositif $D_j$ calcule le résultat $R_j(X)$ comme suit :

$$R_j(X) = \sum_{p=1}^{l} R_{j,p}(X) + f_j Y$$

Ainsi, chaque résultat $R_j(X)$ inclus déjà une « portion » du terme $f_Y(Y)$ si bien que, par la suite, le dispositif $D_{m+1}$ obtient une valeur égale à $\sum_{j=1}^{m} R_j(X) + f_Y(Y)$ en sommant les m résultats fournis par les dispositifs $D_1$ à $D_m$, respectivement. Autrement dit :

$$\sum_{j=1}^{m} R_j(X) = \sum_{i=1}^{n} f_i(x_i, Y) + f_Y(Y)$$

Cette autre variante est plus sécurisée, donc avantageuse, car permet de calculer la métrique $f(X, Y)$ sans passer par le calcul explicite du terme $f_Y(Y)$. La valeur du terme $f_Y(Y)$ ne peut donc pas être trouvée dans la mémoire de l'un quelconque des dispositifs du système de calcul 4.

### 3.3) Carré de la distance de Mahalanobis

Dans un troisième mode de réalisation, la métrique $f(X, Y)$ est le carré de la distance de Mahalanobis entre les données biométriques $X$ et $Y$.

Les données d'entrée présentent la même forme que dans le premier mode de réalisation et dans le deuxième mode de réalisation, et on a encore, pour tout $i$ allant de 1 à $K$ et pour tout $p$ allant de 1 à $l$ :

$$f_{K(i-1)+p}\left(x_{K(i-1)+p}, Y\right) = c_{p,i}(Y). x_{K(i-1)+p}$$

où $c_{p,i}(Y)$ est un scalaire dont la valeur dépend de $i$, de $p$ et de la donnée $Y$, tout comme dans le deuxième mode de réalisation.

Toutefois, à la différence du deuxième mode de réalisation, on a :

$$f_X(X) = X^T M X$$

$$f_Y(Y) = Y^T M Y$$

où $M$ est une matrice carrée prédéfinie de la forme $(M_{u,v})_{u,v=1,...,K}$.

Par ailleurs, on a, pour tout $p$ allant de 1 à $l$ et pour tout $i$ allant de 1 à $K$ :

$$c_{p,i}(Y) = -2^p . \sum_{v=1}^{K} M_{i,v} Y_v.$$

On voit donc que les coefficients $c_{p,i}(Y)$ sont également fonction de la matrice $M$ prédéfinie.

Ces différences mises à part, les étapes mises en oeuvre dans le deuxième mode de réalisation sont également reprises dans le troisième mode de réalisation. Il est à noter en particulier que les deux variantes gérant différemment le terme $f_Y(Y)$ sont applicable au troisième mode de réalisation.

### 3.4) Distance de Hamming

Dans un quatrième mode de réalisation, la métrique $f(X, Y)$ est la distance de Hamming entre les données biométriques $X$ et $Y$.

Dans le quatrième mode de réalisation, la donnée $Y$ est simplement traitée comme un vecteur de bits $(y_1, \ldots ,y_n)$.

Par ailleurs, on a :

$$f_X(X) = f_Y(Y) = 0$$

$$f_i(x_i, Y) = x_i \oplus y_i$$

où $\oplus$ est une disjonction exclusive.

Dans le quatrième mode de réalisation, pour tout $j$ allant de 1 à $m$, le dispositif $D_j$ calcule une donnée intermédiaire $R_j(X)$ comme suit à l'étape $102_j$ :

$$R_j(X) = \sum_{i=1}^{n} DPF_j(1-y_i, 1; x_i)$$

dans lequel $DPF_1(0,1;\cdot)$ ,..., $DPF_{m,}(0,1;\cdot)$ sont $m$ fonctions vérifiant les conditions suivantes :

$$\sum_{j=1}^{m} DPF_j(0,1; x) = 1 \quad \text{si } x = 0$$

$$\sum_{j=1}^{m} DPF_j(0,1; x) = 0 \quad \text{si } x \neq 0$$

et dans lequel $DPF_1(1,1;\cdot)$, ..., $DPF_{m,}(1,1;\cdot)$ sont $m$ fonctions vérifiant les conditions suivantes :

$$\sum_{j=1}^{m} DPF_j(1,1; x) = 1 \quad \text{si } x = 1$$

$$\sum_{j=1}^{m} DPF_j(1,1; x) = 0 \quad \text{si } x \neq 1$$

Les m fonctions $DPF_1(0,1;\cdot)$ ,...., $DPF_m(0,1;\cdot)$ représentent une distribution d'une fonction de point respectivement sur les m dispositifs $D_1$ à $D_m$. Les m fonctions $DPF_1(1,1;-)$, ..., $DPF_m(1,1;\cdot)$ représentent une distribution d'une autre fonction de point respectivement sur les m dispositifs $D_1$ à $D_m$.

Ainsi, dans ce quatrième mode de réalisation, pour tout $j$ allant de 1 à $m$, le dispositif $D_j$ ne calcule qu'une donnée intermédiaire, constituant un seul résultat $R_j(X)$.

Le dispositif $D_{m+1}$ obtient une valeur égale à $\sum_{i=1}^{n} f_i(x_i, Y)$ par sommation des $m$ résultats $R_1(X),..., R_m(X)$.

**4) Autres variantes de réalisation**

Dans ce qui précède, il a été décrit des modes de réalisation dans lesquels la comparaison entre la métrique $f(X, Y)$ et le seuil est une étape 106 mise en oeuvre par le dispositif $D_{m+1}$. En variante, il est possible de réaliser cette comparaison de manière distribuée, c'est-à-dire confier aux dispositifs $D_1$ à $D_m$ des calculs additionnels produisant des contributions à cette comparaison. Une telle distribution est connue de l'homme du métier, et a été décrite dans le document « Function Secret Sharing : Improvements and Extensions », par Elette Boyle *et al.,* CCS 2016. Lesdites contributions peuvent être additionnées aux données intermédiaires discutées précédemment, de sorte à être incluses dans les résultats qui sont ensuite transmis au dispositif $D_{m+1}$.

Par ailleurs, il a été décrit des modes de réalisation dans lesquels des données intermédiaires sont sommées par les dispositifs $D_1$ à $D_m$ de sorte à produire des résultats qui sont ensuite transmis au dispositif $D_{m+1}$. En variante, il est envisageable que les dispositifs $D_1$ à $D_m$ transmettent au dispositif $D_{m+1}$ les données intermédiaires séparément et de confier au dispositif $D_{m+1}$ le soin de les sommer.

**Revendications**

**1.** Procédé de calcul distribué d'une métrique $f(X,Y)$ représentative d'un écart entre une donnée $X$ comprenant $n$ bits $(x_1, ... ,x_n)$ et une donnée $Y,$ la métrique $f(X,Y)$ étant de la forme :

$$f(X,Y) = f_X(X) + \sum_{i=1}^{n} f_i(x_i, Y) + f_Y(Y)$$

où $f_X$ est une fonction dépendant uniquement de la donnée $X$, $f_Y$ est une fonction dépendant uniquement de la donnée $Y$, et pour tout $i$ allant de 1 à $n$, $f_i$ est une fonction prédéfinie, le procédé étant mis en oeuvre par un système comprenant $m + 1$ dispositifs $(D_1, ... ,D_{m+1})$ distincts ayant des indices respectifs allant de 1 à $m + 1$, avec $m \geq 2$, le procédé comprenant :

- pour tout $j$ allant de 1 à $m$, calcul d'au moins une donnée intermédiaire par le dispositif d'indice $j$ ($D_j$), chaque donnée intermédiaire dépendant de la donnée $X$ et de la donnée $Y$, et transmission au dispositif d'indice $m + 1$ ($D_{m+1}$) d'au moins un résultat comprenant ou dépendant de chaque donnée intermédiaire,
- détermination, par le dispositif d'indice $m + 1$ ($D_{m+1}$), de la métrique $f(X,Y)$, la détermination comprenant une sommation de chaque résultat pour obtenir une valeur égale à $\sum_{i=1}^{n} f_i(x_i, Y)$ ou une valeur égale à $\sum_{i=1}^{n} f_i(x_i, Y) + f_Y(Y)$.

**2.** Procédé selon la revendication 1, dans lequel :

- la donnée $X$ forme un vecteur de $K$ données $(X_1, ... ,X_K)$, où pour tout $i$ allant de 1 à $K$, la donnée $X_i$ forme un vecteur de $l$ bits $(x_{K(i-1)+1}, ... , x_{K(i-1)+l})$,
- la donnée $Y$ forme un vecteur $(Y_1, ... , Y_K)$, où pour tout $i$ allant de 1 à $K$, $Y_i$ est un entier,
- on a $n = K.l$, où $K > 1$ et $l > 1$,
- pour tout $í$ allant de 1 à $K$ et pour tout $p$ allant de 1 à $l$, on a :

$$f_{K(i-1)+p}\left(x_{K(i-1)+p}, Y\right) = c_{p,i}(Y). x_{K(i-1)+p}$$

où $c_{p,i}(Y)$ est un scalaire dont la valeur peut dépendre de i, de $p$ et de la donnée $Y$,
- pour tout $j$ allant de 1 à m, le dispositif d'indice $j$ ($D_j$) calcule $l$ données intermédiaires $R_{j,1}(X),...,R_{j,l}(X)$, chaque donnée intermédiaire étant calculée comme suit : pour tout $p$ allant de 1 à $l$,

$$R_{j,p}(X) = \sum_{i=1}^{K} DPF_{j,p}(a, c_{p,i}(Y); x_{K(i-1)+p})$$

où $a$ est une constante prédéfinie,
- pour tout $i$ allant de 1 à $K$ et pour tout $p$ allant de 1 à l, $DPF_{1,p}(a, c_{p,i}(Y);\cdot),..., DPF_{m,p}(a, c_{p,i}(Y);\cdot)$ sont m fonctions vérifiant les conditions suivantes :

$$\sum_{j=1}^{m} DPF_{j,p}(a, c_{p,i}(Y); x) = c_{p,i}(Y) \quad \text{si } x = a$$

$$\sum_{j=1}^{m} DPF_{j,p}(a, c_{p,i}(Y); x) = 0 \quad \text{si } x \neq a.$$

3. Procédé selon la revendication 2, comprenant les étapes suivantes :

    - pour tout $j$ allant de 1 à $m$, calcul par le dispositif d'indice $j$ ($D_j$) d'un résultat $R_j(X)$ à partir de la somme des $l$ données intermédiaires $R_{j,1}(X),...,R_{j,l}(X)$,
    - pour tout $j$ allant de 1 à $m$, transmission du résultat $R_j(X)$ au dispositif d'indice $m + 1$ ($D_{m+1}$),
    - sommation, par le dispositif d'indice $m + 1$ ($D_{m+1}$), des $m$ résultats $R_1(X),...,R_m(X)$ de sorte à obtenir la valeur du terme $\sum_{i=1}^{n} f_i(x_i, Y)$ .

4. Procédé selon l'une quelconque des revendications 2 et 3, dans lequel pour tout $j$ allant de 1 à $m$, le résultat $R_j(X)$ est obtenu par sommation des $l$ données intermédiaires $R_{j,1}(X),...,R_{j,l}(X)$ et d'un terme $f_j Y$ mémorisé par le dispositif d'indice $j$ ($D_j$), et dans lequel :

$$\sum_{j=1}^{m} f_j Y = f_Y(Y).$$

5. Procédé selon l'une quelconque des revendications 2 à 4, dans lequel :

$$a = 1$$

$$f_X(X) = f_Y(Y) = 0$$

et pour tout $p$ allant de 1 à l et pour tout $i$ allant de 1 à K :

$$c_{p,i}(Y) = 2^{p-1} \cdot Y_i.$$

6. Procédé selon l'une quelconques des revendications 2 à 4, dans lequel :

$$a = 1$$

$$f_X(X) = \sum_{i=1}^{K} X_i^2$$

$$f_Y(Y) = \sum_{i=1}^{K} Y_i^2$$

et dans lequel, pour tout *p* allant de 1 à *l* et pour tout *i* allant de 1 à *K* :

$$c_{p,i}(Y) = -2^p . Y_i.$$

**7.** Procédé selon l'une quelconque des revendications 2 à 4, dans lequel :

$$a = 1$$

$$f_X(X) = X^T M X$$

$$f_Y(Y) = Y^T M Y$$

où M est une matrice carrée prédéfinie de la forme $(M_{u,v})_{u,v=1,\ldots,K}$,
et dans lequel, pour tout *p* allant de 1 à *l* et pour tout *i* allant de 1 à *K* :

$$c_{p,i}(Y) = -2^p . \sum_{v=1}^{K} M_{i,v} Y_v.$$

**8.** Procédé selon la revendication 1, dans lequel :

- la donnée *Y* forme un vecteur de bits $(y_1, \ldots, y_n)$,
- on a :

$$f_X(X) = f_Y(Y) = 0$$

- pour tout *Í* allant de 1 à n, on a :

$$f_i(x_i, Y) = x_i \oplus y_i$$

où $\oplus$ est une disjonction exclusive,
- pour tout *j* allant de 1 à *m*, le dispositif d'indice *j* $(D_j)$ calcule une donnée intermédiaire $R_j(X)$, comme suit :

$$R_j(X) = \sum_{i=1}^{n} DPF_j(1 - y_i, 1; x_i)$$

14

dans lequel $DPF_1(0,1;\cdot)$ ,..., $DPF_{m'}(0,1;\cdot)$ sont m fonctions vérifiant les conditions suivantes :

$$\sum_{j=1}^{m} DPF_j(0,1;x) = 1 \quad \text{si } x = 0$$

$$\sum_{j=1}^{m} DPF_j(0,1;x) = 0 \quad \text{si } x \neq 0$$

dans lequel $DPF_1(1,1;\cdot)$, ..., $DPF_m(1,1;\cdot)$ sont m fonctions vérifiant les conditions suivantes :

$$\sum_{j=1}^{m} DPF_j(1,1;x) = 1 \quad \text{si } x = 1$$

$$\sum_{j=1}^{m} DPF_j(1,1;x) = 0 \quad \text{si } x \neq 1$$

et dans lequel le dispositif d'indice $m + 1$ ($D_{m+1}$) obtient une valeur égale à $\sum_{i=1}^{n} f_i(x_i, Y)$ par sommation des $m$ résultats $R_1(X)$,..., $R_m(X)$.

**9.** Procédé selon l'une des revendications précédentes, dans lequel la donnée $X$ et la donnée $Y$ sont des données biométriques.

**10.** Procédé d'authentification ou d'identification biométrique comprenant des étapes de :

- acquisition par un capteur d'une donnée biométrique X se rapportant à un individu,
- calcul d'une métrique $f(X, Y)$ représentative d'un écart entre la donnée biométrique $X$ et une donnée biométrique $Y$ de référence au moyen du procédé selon l'une quelconque des revendications précédentes,
- comparaison entre la métrique $f(X,X)$ et un seuil prédéfini.

**11.** Procédé selon la revendication précédente, dans lequel la comparaison comprend des calculs distribués sur les $m$ + 1 dispositifs ($D_1$,..., $D_{m+1}$).

**12.** Mémoire lisible par ordinateur stockant des instructions exécutables par l'ordinateur pour l'exécution des étapes du procédé selon l'une quelconque des revendications 1 à 11.

**13.** Système de calcul (4) distribué d'une métrique $f(X, Y)$ représentative d'un écart entre une donnée $X$ comprenant n bits ($x_1, \ldots, x_n$) et une donnée $Y$, dans lequel la métrique $f(X, Y)$ est de la forme :

$$f(X,Y) = f_X(X) + \sum_{i=1}^{n} f_i(x_i, Y) + f_Y(Y)$$

où $f_X$ est une fonction dépendant de la donnée X, $f_Y$ est une fonction dépendant de la donnée Y, et, pour tout $i$ allant de 1 à n, $f_i$ est une fonction prédéfinie,
le système comprenant $m$ + 1 dispositifs ($D_1, \ldots, D_{m+1}$) distincts ayant des indices respectifs allant de 1 à $m$ + 1, avec $m \geq 2$, dans lequel :

- pour tout $j$ allant de 1 à m, le dispositif d'indice $j$ ($D_j$) est configuré pour calculer au moins une donnée intermédiaire, chaque donnée intermédiaire dépendant de la donnée $X$ et de la donnée $Y$, et pour transmettre au dispositif d'indice $m + 1$ ($D_{m+1}$) au moins un résultat comprenant ou dépendant de chaque donnée intermédiaire,

- le dispositif d'indice $m + 1$ ($D_{m+1}$) est configuré pour déterminer la métrique $f(X,Y)$, la détermination comprenant une sommation de chaque résultat pour obtenir la valeur du *terme* $\sum_{i=1}^{n} f_i(x_i, Y)$.

14. Système d'authentification ou d'identification biométrique comprenant :

- un capteur biométrique configuré pour acquérir une donnée biométrique X se rapportant à un individu,
- un système de calcul (4) selon la revendication 13 pour calculer une métrique *f(X,Y)* représentative d'un écart entre la donnée biométrique *X* et une donnée biométrique *Y* de référence,
- comparaison entre la métrique *f(X,X)* et un seuil prédéfini.

Figure 1

Figure 2

Europäisches
Patentamt

European
Patent Office

Office européen
des brevets

## RAPPORT DE RECHERCHE EUROPEENNE

Numéro de la demande

**EP 23 17 2866**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | DESHMUKH SIDDHANT ET AL: "Efficient and secure template blinding for biometric authentication", 2016 IEEE CONFERENCE ON COMMUNICATIONS AND NETWORK SECURITY (CNS), IEEE, 17 octobre 2016 (2016-10-17), pages 480-488, XP033068194, DOI: 10.1109/CNS.2016.7860539 | 1,9,10, 12-14 | INV. H04L9/32 |
| A | * section IV; figure 1 * | 2-8,11 | |
| A | JULIEN BRINGER ET AL: "GSHADE: Faster Privacy-Preserving Distance Computation and Biometric Identification", PROCEEDINGS OF THE 2ND ACM WORKSHOP ON INFORMATION HIDING AND MULTIMEDIA SECURITY, IH&MMSEC '14, 11 juin 2014 (2014-06-11), pages 187-198, XP055291441, New York, New York, USA DOI: 10.1145/2600918.2600922 ISBN: 978-1-4503-2647-6 * section 3 * | 1-11 | |

**DOMAINES TECHNIQUES RECHERCHES (IPC)**

H04L

Le présent rapport a été établi pour toutes les revendications

| Lieu de la recherche | Date d'achèvement de la recherche | Examinateur |
|---|---|---|
| Munich | 26 octobre 2023 | Billet, Olivier |

EPO FORM 1503 03.82 (P04C02)